# EUROPEAN PATENT APPLICATION

(11) **EP 4 443 529 A1**
(43) Date of publication of application: **09.10.2024**
(21) Application number: 23167208.0
(22) Date of filing: 07.04.2023
(51) Int. Cl.: H01M 4/04, H01M 4/131, H01M 4/485, H01M 4/66, H01M 4/75, H01M 10/0525, H01M 10/0587, H01M 50/44

(54) **A METAL-ION ELECTROCHEMICAL ACCUMULATOR, WITH ELECTRODES WITH ELECTRICALLY CONDUCTIVE SUBSTRATES FORMING THE COLLECTORS WHICH ARE WOUND IN A HELIX AROUND EACH OTHER, SEPARATED BY A SEPARATOR ALSO WOUND IN A HELIX AND ENCAPSULATED IN A SHEATH**

(71) Applicant: Institut Mines-Télécom, 91120 Palaiseau (FR)
(72) Inventor: DJENIZIAN, Thierry, 13390 AURIOL (FR); MUNIRAJ, Vedikujilazhagan, 13120 Gardanne (FR); DELATTRE, Roger, 13180 GIGNAC-LA-NERTHE (FR); RAMUZ, Marc, 13720 LA BOUILLADISSE (FR)
(74) Representative: Cabinet Nony

(57) **Abstract**

A metal-ion electrochemical accumulator, with electrodes with electrically conductive substrates forming the collectors which are wound in a helix around each other, separated by a separator also wound in a helix and encapsulated in a sheath.

The invention essentially in a battery under a general form as a single thread which can be bent as much as needed and stretchable more than 2% of its length, which a coaxial architecture made of electrodes coaxially wound in helix around to each other with the intercalation of a separator film which is also advantageously laid by helicoidally wound in direct contact with the innermost electrode.

## Description

### Technical field

The present invention relates to the field of electrochemical accumulators, and more particularly metal-ion accumulators.

The invention aims primarily to propose a new architecture of such accumulators, which allows them to be both bendable and stretchable.

Although described with reference to a lithium-ion accumulator, the invention applies to any metal-ion electrochemical accumulator, that is to say also the sodium-ion, magnesium-ion, aluminum-ion and other such accumulators, or, more generally, to any electrochemical accumulator.

An accumulator according to the invention can be onboard or stationary. For example, an accumulator to the invention can be useful to fulfill the performances requirements of miniaturized sensors for Internet of Things (IoT) application, with the main advantage to be arranged under a shape as desired.

### Prior art

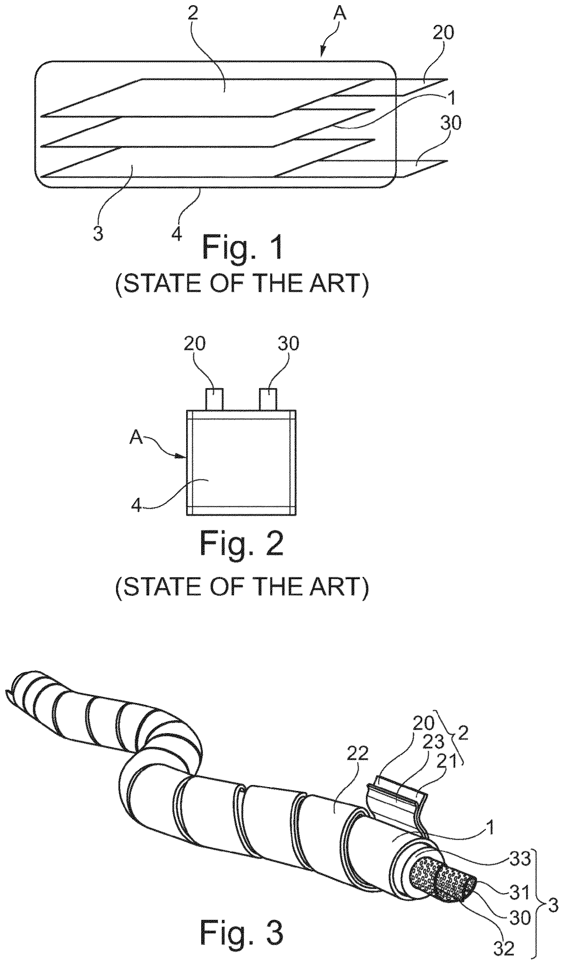

As illustrated schematically in figures 1 and 2, a lithium-ion battery or accumulator normally comprises at least one electrochemical cell consisting of an electrolyte component 1 between a positive electrode or cathode 2 and a negative electrode or anode 3, a current collector 20 connected to the cathode 2, a current collector 30 connected to the anode 3 and, finally, a packaging 4 arranged to contain the electrochemical cell tightly while being passed through by a part of the current collectors 20, 30.

The architecture of the conventional lithium-ion batteries comprises an anode, a cathode and an electrolyte. Several types of geometry of conventional architecture are known:
- a cylindrical geometry as disclosed in the patent application US 2006/0121348,
- a prismatic geometry as disclosed in the patents US 7348098B1, US 7338733B1;
- a stacked geometry as disclosed in the patent applications US 2008/060189, US 2008/0057392, and the patent US 7335448B1.

The electrolyte component 1 can be in solid, liquid or gel form. In this last form, the component can comprise a separator made of polymer, of ceramic or of microporous composite soaked with organic electrolyte or electrolytes or of ionic liquid type which allows the displacement of the lithium ion from the cathode to the anode for a charge and in reverse for a discharge, which generates the current. The electrolyte is generally a mixture of organic solvents, for example carbonates to which is added a lithium salt, typically LiPF6.

The positive electrode or cathode 2 is composed of lithium cation insertion materials which are generally composite, like LiFePO₄, LiCoO₂, LiNi_{0.33}Mn_{0.33}Co_{0.33}O₂.

The negative electrode or anode 3 is very often composed of graphite carbon or of Li₄TiO₅O₁₂ (titanate material), possibly also based on silicon or composite formed based on silicon.

The current collector 20 connected to the positive electrode is generally made of aluminum.

The current collector 30 connected to the negative electrode is generally made of copper, of nickel-plated copper or of aluminum.

These electrodes 2, 3 for Li-ion accumulators are usually made according to a continuous process by a technique of coating the active insertion material on a metal strip, as current collector, in order to constitute the active continuous layer. These coating techniques are known by the terms "slot die" or "roll to roll transfer".

A lithium-ion battery or accumulator can obviously comprise a plurality of electrochemical cells which are stacked on top of one another.

Traditionally, a Li-ion battery or accumulator uses a pair of materials on the anode and the cathode allowing it to operate at a high voltage level, typically equal to 3.6 volt.

Depending on the type of application targeted, the aim is to produce either a thin and flexible lithium-ion accumulator or a rigid accumulator: the packaging is then either flexible or rigid and in the latter case constitutes a kind of housing.

The flexible packagings are usually manufactured from a multilayer composite material, composed of a stacking of aluminum layers covered by one or more polymer films laminated by bonding.

The rigid packagings are, for their part, used when the applications targeted are restrictive where a long lifetime is sought, with, for example, much higher pressures to be withstood and a stricter required tightness level, typically less than 10⁻⁸ mbar.l/s, or in highly restrictive environments such as the aeronautic or space field.

For some applications, the main drawbacks of the traditional geometries of conventional architecture, which has been described above are that they are bulky, heavy, and rigid whatever their electrochemistry and their flexible or rigid packagings. For example, because of the recent increasing interest to developing small, rapid, and portable electronic devices it is becoming critically important to provide matching light and flexible energy-storage systems to power them.

To this end, lithium-ion batteries called as Linear fiber-shaped Li-ion Batteries (LIB) have become increasingly important owing to their advantages of miniaturization, conformability, and weavability.

The inventors of the present invention have made the inventory of known LIB solutions, which architectures can be summarized as follows:
- the electrodes are under two parallel aligned fibers separated by an interposed separator, either with electrodes as TiO₂/rGO fiber and LMO coated carbon cloth fiber parallelly inserted into a heat-shrinkable tube in a parallel format with a commercial Celgard^{®} separator between them: [1], or with electrodes prepared by in-situ on the Carbon Nanotube sheets and twisted to form yarns: [2];
- the LIB is constituted of parallel ribbons of 2 mm width: [3];
- fiber electrodes are twisted one on the other and are encapsulated polypropylene tube in which the electrolyte is injected: [4];
- the LIB is coaxial and based on multilayered coaxial structure of solid-state battery components over flexible and electrically conductive carbon fibers (CFs): [5];
- the LIB is coaxial and achieved by sequentially winding aligned multi-walled carbon nanotube (MWCNT) composite yarn cathode and anode onto a cotton fiber: [6];
- the LIB is the result of a thermal drawing process with simultaneous flows of multiple complex electroactive gels, particles, and polymers within protective flexible cladding: [7].

The different features of the components and performances of these LIBs are summarized in the table 1 below.

**[Table 1]:**

| References | Current collector material (anode/cathode) | Active electrode material (cathode /anode) | Working potential (Volt) | Specific capacity | Energy density | Capacity retention/cycles/current density |
|---|---|---|---|---|---|---|
| [1] | rGO / Li wire | LiMn₂O₄: TiO₂/rGO | 3.5 | 28 µAh cm⁻¹ | 4.0-6.3 mWh cm⁻³ | - |
| [2] | MWCNT yarn /MWCNT yarn | Li₄Ti₅O₁₂ /LiMn₂O₄ | 2.5 | -1 2.8 µAh cm | 17.7 mWh cm⁻³ | - |
| [3] | Cu/ Al | Amorphous Silicon/ LiFePO₄ | 2.5 to 4.4 | 268 mA h cm⁻³ at 1C | NA | 77%/ 100/0.5C rate |
| [4] | Cu/ Al wires | LCO/Graphite | 3 to 4.4 | 160 mAh g⁻¹ | 182.07 Wh 1⁻¹ | - |
| [5] | MWCNT/conductive carbon fibers | LTO/LFP | 2.5 | 3.1 µAh cm⁻² | ∼31.2 mW cm⁻³ | 85% / 100 / 26 µA cm⁻² |
| [6] | CNT yarns | CNT-Si / CNT-LMO | 2 to 4.3 | 106.5 mAh g⁻¹ | 0.75 mWh cm⁻¹ | 87% / 100 / 1 C |
| [7] | copper (or tungsten) wires | LTO/LFP | 1 to 2.4 | 8.8 µAh cm⁻¹ | 15.5 µWh cm⁻¹ | 90% / 100 cycles /5 C (25 µA cm⁻¹) |

The inventors have concluded that all the existing LIBs need complicated process to manufacture them and have architectures not optimized in terms of compacity, flexibility, stretchability and of electrode interfacial properties.

There is therefore a need to improve the battery LIB solutions, notably in order to facilitate their manufacturing, increase their compacity, flexibility, stretchability and electrode interfacial properties.

The aim of the invention is to at least partly address such need.

### Summary of the invention

To do this, the invention relates, under one of its aspects, to a metal-ion electrochemical accumulator, comprising:
- a first and a second electrically conductive substrate forming a current collector each comprising two main faces, only one of which supports an active electrode material in defining an electrode, the electrode active material supported by the second collector being of opposite polarity to that supported by the first collector, the first and second collectors being wound in coaxial helices around each other;
- at least one electrically insulating separator film impregnated with an electrolyte, arranged in contact with each of the electrode materials supported by the first and second collectors;
- an encapsulation sheath forming a flexible packaging, covering the periphery of the helix of the first or the second collector which is the outermost, to contain the first and the second collectors and the separator film, with sealing while being crossed by a first and a second pole of the accumulator respectively connected or constituted by a part of the first or of the second collector.

According to an advantageous embodiment, the helices of the first and of the second collector are circular helices.

Advantageously, the first and/or the second collector is(are) a strip of metal fabric or metal braid or metal foil.

Preferably, the fabric or the braid or the strip are of uniform width.

More preferably, the innermost fabric or braid or strip is wound helically with partial overlap, preferably between 0 and 50% and at an angle between 110 and 130 degrees to the axis of winding.

The first and/or the second current collector are made in aluminum or in copper.

According to another advantageous embodiment, the separator film also is helically wrapped around the electrode active material of the innermost first or second collector. It ensures that the mechanical structure of the battery is increased with better interfacial properties. According to this embodiment, and an advantageous variant, the separator film is a nonwoven web of polymeric material. The polymer material may be selected among polypropylene (PP), polyethylene (PE), polyvinylidene fluoride (PVDF), polytetrafluoroethylene (PTFE), poly (vinylidene fluoride-co-hexafluoropropylene) (PVDF-HFP).

Preferably, the polymer film is a polypropylene nonwoven. For example, the film is a band of the commercial Bouffant Cap made by Spunbonded polypropylene (SPP) fabric.

The first and the second current collector and, where applicable, the separator film are wound helically in the same winding direction or in the opposite direction.

According to this variant the encapsulation sheath being a heat-shrink sheath on the first or the second current collector. The material of the heat-shrink sheath may be selected among polyethylene (PE), polyvinylidene fluoride (PVDF), polytetrafluoroethylene (PTFE), eventually modified with cross-linking and adhesive liner properties.

According to an advantageous embodiment, the metal-ion electrochemical accumulator comprises two output terminals each under the form of a pin header, one of the two pin headers being soldered with the helix cathode and extending in the longitudinal direction of one end of the accumulator and electrically insulated with the helix anode, whereas the other of the two pin headers being soldered with the helix anode and extending in the longitudinal direction of the other end of the accumulator and electrically insulated with the helix cathode. This embodiment is very compact, and practical to connect the accumulator to an electronic equipment.

The metal-ion electrochemical accumulator is advantageously configured to be stretchable at least 2% of its length, preferably up to 10%.
constituting a Li-ion accumulator, in which:
- the material of the negative electrode or electrodes is chosen from the group comprising graphite, lithium, titanate oxide Li₄TiO₅O₁₂;
- the material of the positive electrode(s) is chosen from the group of intercalation/insertion compounds of the LiMO₂ type with M representing Co, Ni or Mn; LiM'₂O₄ with M' representing Ni or Mn; LiM"PO4 with M" representing Fe, Co, Mn or Ni.

The invention concern also a module or a pack-battery, comprising a plurality of accumulators such as described above, electrically connected in series and/or in parallel.

The invention concerns also a method for producing an accumulator such as described above, comprising the following steps:
a/ supply of a first current collector;
b/ winding of the first current collector on itself in a helix;
c/ deposition of an active electrode material on the first coiled collector thus forming a first of the electrodes;
d/ supply and installation of an electrically insulating separator film onto the active material of the first of the electrodes;
e/ supply of a second current collector on which is already deposited an active material of opposite polarity to that deposited on the first collector, thus forming the second of the electrodes;
f/ winding of the second current collector in a helix with its active electrode material around and in contact with the separator film;
g/ insertion of an electrolyte injection needle at one of the longitudinal ends of the subassembly formed after step f/;
h/ laying an encapsulation sheath around the second collector of the sub-assembly according to step g/;
i/ injection of an electrolyte in liquid or gel form into the injection needle so as to carry out the electrochemical formation of the accumulator.

Step d/ is advantageously achieved by winding in a helix by covering the active material of the first of the electrodes.

Step d/ is also preferably achieved by thermal roll-pressing the separator film onto the active material of the first of the electrodes.

According to an advantageous variant, step c/ is achieved by dip coating the first helically wound collector.

According to another advantageous variant, step h/ is achieved by heat-shrinking on the second helically wound collector.

At last, the invention concerns the use of the accumulator such as described above, to electrically supply a connected and communicating object, a medical device, an electronic device implanted in a textile.

Thus, the invention consists essentially in a battery under a general form as a single thread which can be bent as much as needed and stretchable more than 2% of its length, which a coaxial architecture made of electrodes coaxially wound in helix around to each other with the intercalation of a separator film which is also advantageously laid by helicoidally wound in direct contact with the innermost electrode.

The process according to the invention overcome complicated processes according to prior art to achieve coaxial fiber electrodes and allows thus flexible coaxial fibrous metal-ion batteries by improving the electrode interfacial properties.

Ultimately, the invention provides numerous advantages, some of which can be cited as follows:
- a solution which increases the compacity, flexibility, stretchability of LIBs with increased interfacial electrode properties
- a solution which is not detrimental to performances of the battery;
- a solution which can be miniaturized;
- the possibility of very rapid and easy conform a battery according to the invention to any complicated environment, such as electrical apparatus, machines, equipments...

Other advantages and features of the invention will emerge more clearly on reading the detailed description of exemplary implementations of the invention given in an illustrative and nonlimiting manner with reference to the following figures.

### Brief description of the drawings

[Fig 1] figure 1 is an exploded perspective schematic view showing the different elements of a lithium-ion accumulator.
[Fig 2] figure 2 is a front view showing a lithium-ion accumulator with its flexible packaging according to the state of the art.
[Fig 3] figure 3 is a perspective partial and exploded view of a lithium-ion accumulator according to the invention.
[Fig 4A] to [Fig 4F] figures 4A to 4F are perspective views illustrating the different steps of the process to manufacture a lithium-ion accumulator according to invention.
[Fig 5] figure 5 are images made by scanning electron microscope (SEM) of respectively a copper fabric as a current collector, wound as a helix (a) and b)), and of said wound copper fabric coated with a LTO layer (c) with cross-section view and d)) forming an anode according to the invention.
[Fig 6A], [Fig 6B] figures 6A and 6B show steps of an advantageous variant of manufacturing a separator of an accumulator according to the invention.
[Fig 7A], [Fig 7B] figure 7A and 7B are microscopic images of respectively an original cap and of the final separator once achieved according to the variant of figures 6A and 6B.
[Fig 8A], [Fig 8B] figures 8A and 8B show steps of an advantageous variant of manufacturing a cathode of an accumulator according to the invention.
[Fig 9] figure 9 is an EDS (energy dispersive spectroscopy) mapping cross-sectional view of an accumulator according to the invention before electrolyte injection (a) and the corresponding schematic representation (b), and a reproduced photography of a fabricated accumulator according to the invention.
[Fig 10], [Fig 11] figures 10 and 11 show respectively galvanostatic charge-discharge (GCD) curves recorded at 0.1C rate, and rate performance at various C-rates of 0.1 0.25, 0.5 and 1, and 0,1 C rate of an assembled coaxial Li-ion battery according to the invention, with a LTO anode, and a LCO cathode.
[Fig 12A], [Fig 12B] figure 12A and 12B illustrate, in the form of GCD curves a durability test of a coaxial Li-ion battery according to the invention respectively at 0.5C rate for 70 cycles and at 0.5C rate for 50 cycles, with a LTO anode, and a LMNO cathode.
[Fig 13] figure 13 shows the result of a stretching test under the form of curve of traction force applied to the end of an accumulator according to the invention in function of the relative displacement of said accumulator.
[Fig 14] figure 14 shows SEM images of a LCO cathode according to the invention after 100 cycles of charge-discharge and during this process, the accumulator was mechanically bent and flattened.

### Detailed description

Figures 1 to 2 relate to different examples of Li-ion accumulators, with flexible packagings according to the state of the art.

These figures 1 to 2 have already been commented on in the preamble and will not therefore be discussed further hereinbelow.

For clarity, the same references designating the same elements according to the state of the art and according to the invention are used for all the figures 1 to 14.

Throughout the present application, the terms "inner", "outer", "below" and "above" should be understood for reference with respect to Li-ion accumulator according to the invention arranged horizontally with the encapsulation sheath being the outermost component.

Figure 3 represents a Li-ion accumulator A according to the invention which has a general shape of a thread or cable with coaxial components, configured to be bent and stretched.

From the core to the outside, the accumulator A includes the following components:
- an innermost electrode 3, which is an anode constituted by a Cu copper fabric 30 wound on itself in a circular helix, which has two main faces 31, 32, the outer face 32 being coated by a lithium insertion active material 33,
- an electrically insulating film, forming a separator 1, which is wound in a circular helix directly in contact with the active material 33,
- an outermost electrode 2, which is a cathode constituted by an Al strip 20 which has two main faces 21, 22, the inner face 21 being coated by a lithium insertion active material 33, wound in a circular helix directly in contact with the separator 1.

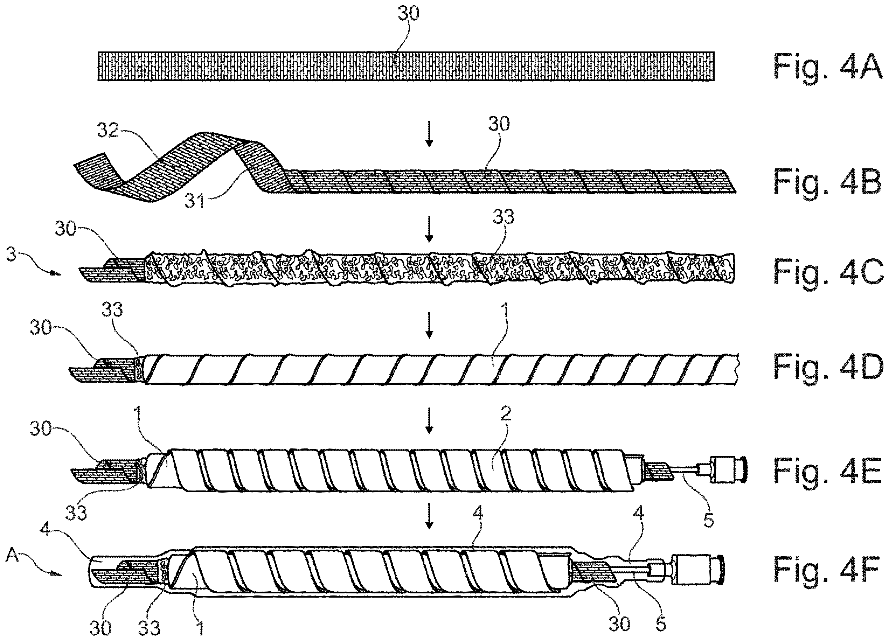

An encapsulation sheath 4 forming a flexible packaging, shown on Figure 4F delimits the outer diameter of the accumulator A.

The active material 33 of the anode 3 may be selected among lithium-titanium-oxide (LTO), carbon allotropes, silicon-carbon.

The electrically insulating film forming the separator 1 may be selected among polypropylene (PP), polyethylene (PE), polyvinylidene fluoride (PVDF), polytetrafluoroethylene (PTFE), poly (vinylidene fluoride-co-hexafluoropropylene) (PVDF-HFP).

The active material 23 of the cathode 2 may be selected among Lithium Cobalt Oxide (LCO), Lithium Manganese Oxide (LMO), Lithium Nickel Manganese Oxide (LMNO), Lithium Nickel Cobalt Aluminum oxide (NCA), Lithium Nickel Manganese Cobalt oxides (NMC), Lithium Iron Phosphate (LFP), Li₂SnO₃.

The manufacturing method of such an accumulator will be now described in reference to Figures 4A to 4F.
Step a/: A Cu fabric 30 with a uniform thickness is supplied (Figure 4A). In the shown example, the Cu fabric has a thickness of 80 µm, a length of 20 mm or above and a width between 0.5 and 2.5mm.
Step b/: The Cu fabric 30 is wound on itself in a helix (Figure 4B).
Step b1/ (optional): A metallic pin header, not shown, may be soldered to one longitudinal end of the Cu fabric 30.
Preferably, a heat shrinking sheath, not shown also, is provided at the junction of pin header and Cu fabric 30 to better sealing purpose.
Step c/: an active electrode material 33 is deposited on the Cu fabric 30 such as wound thus forming an anode 3 (Figure 4C). Preferably, the active material has a uniform thickness of range between 10 to 250 µm and has been achieved by dip coating technics.
Step c1/ (optional): At the other longitudinal end of Cu fabric 30, opposite to the end where a first pin header is soldered, a plastic hollow shaft as an injection needle, not shown, is connected by a portion of a heat shrink tube, not shown.
Step d/: An electrically insulating separator film 1 is supplied and directly applied onto the active material 33 of the anode 3 (Figure 4D). Preferably, the separator 1 is made from the commercial Bouffant Cap made by Spunbonded polypropylene (SPP) fabric and is wound in a helix and applied by thermal roll-pressing directly onto the layer 33 of the anode 3. The separator film 1 has preferably a uniform thickness of range between 10 to 200µm and a uniform width of range between 0.5 and 2.5 mm.
Step e/: An Al strip 20 which inner main face 21 supported an active material 23 already deposited, forming a cathode 2 is supplied.
Step f/: The cathode 2 is wound in a helix with its active electrode material 23 around and in contact with the separator film 1, the outer main face 22 of the Al strip 20 being devoid of any coating material (Figure 4E).
Step g/: An electrolyte injection needle 5 is inserted at one of the longitudinal ends of the subassembly formed after step f/ (Figure 4E).
Step h/: An encapsulation sheath 4 is layed around the Al Strip of the sub-assembly according to step g/, such as to form the flexible packaging of the accumulator A (Figure 4F). Preferably, step h/ is achieved by heat-shrinking the sheath 4. The material of the encapsulating 4 may be selected among polyolefins and fluorocarbons with and without cross-linking or adhesive linin. Preferably also, the thickness of the encapsulation sheath 4 is uniform and comprised between 0.1 and 0.6mm.
Step i/: An electrolyte in liquid or gel form is injected in the injection needle 5, preferably in a glove box, so as to carry out the electrochemical formation of the accumulator A. The electrolyte may be selected among Lithium hexafluorophosphate (LiPF6), Lithium bis(fluorosulfonyl) imide (LiFSI) LiClO4, LiCl. Then, the injection needle 5 is removed, preferably by cutting if the needle is a plastic hollow shaft.
Step i1/ (optional): The inner hole of plastic hollow shaft which has been cut, is sealed, preferably by inserting a plastic microfiber piece.
Step i2/ (optional): At the cathode side after all the sealings done, a second metallic pin header, not shown, may be soldered to the longitudinal end of the Al strip 20. A metallic sleeve or a clad may be inserted. The Al strip 20 may be tightly covered by the metal sleeve.

In the shown example, the anode 3 and the cathode 2 are wound in a circular helix in the same rolling direction whereas the separator 1 is wound in the opposite direction. It can be foreseen, opposite and/or same rolling direction for these three components 1, 2, 3 of the accumulator A.

The inventors have made some trials and observations to analyze an accumulator A, such as manufactured according to the process as illustrated by Figures 4A to 4F.

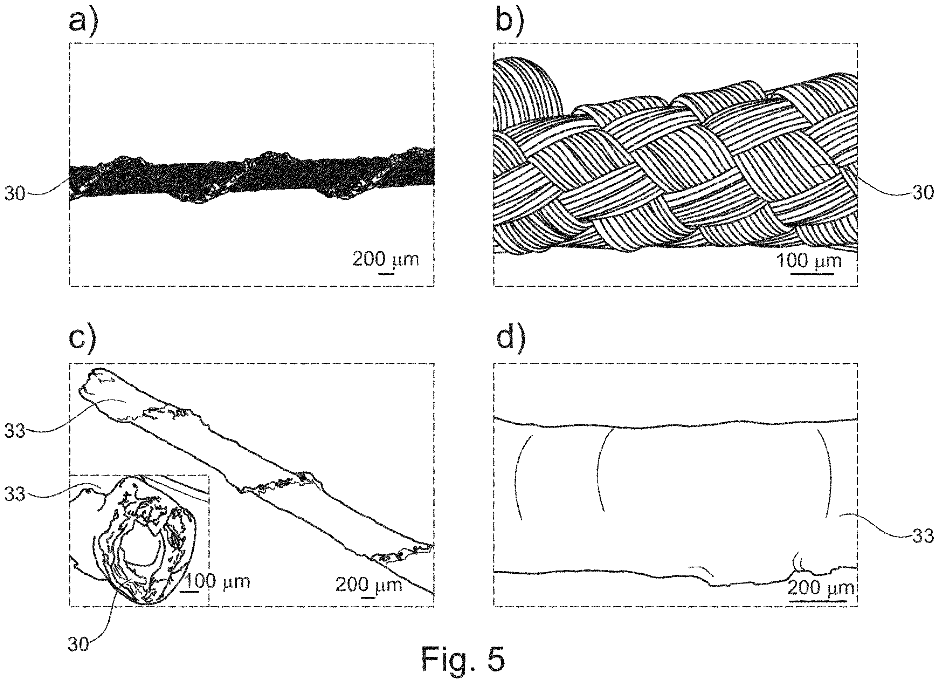

Figure 5 shows SEM images respectively of a copper fabric of a thickness of 415 µm (a) and b)) and once coated with a layer of LTO of a thickness of 625 µm (b) and c)). It can be seen the very uniform and conforming coating.

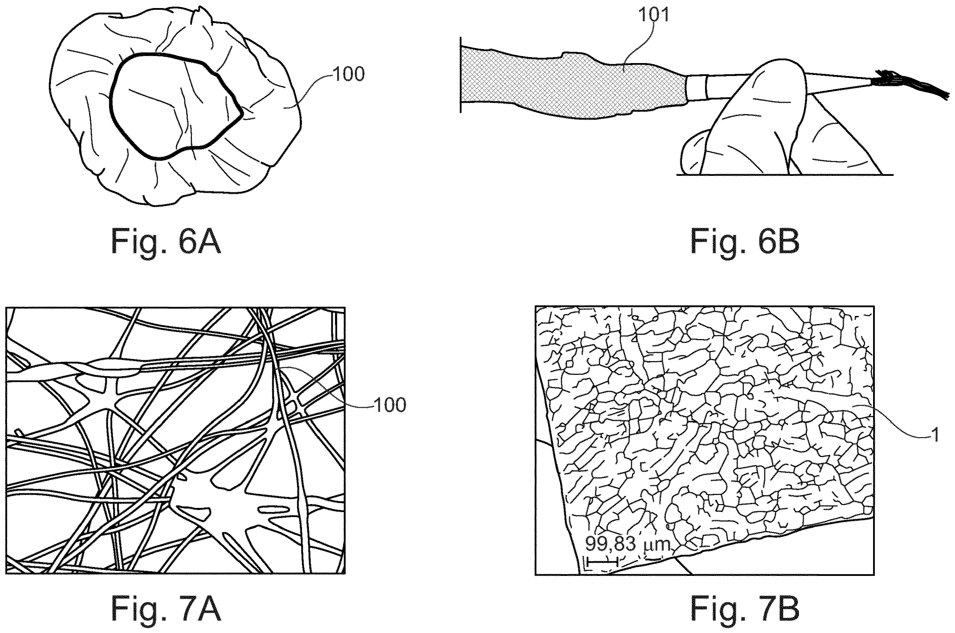

Figures 6A and 6B show steps of an advantageous variant of manufacturing a separator 1. A white Bouffant Cap of 10 g/m², made by Spunbonded polypropylene (SPP) fabric 100, is cut in strips 101. A strip 101 is thus introduced in a calender machine, not shown, to obtain a densified strip 1, which constitutes the separator of an accumulator A.

Figure 7A and 7B are microscopic images of respectively the original cap 100 and of the final separator 1, once cut and calendered.

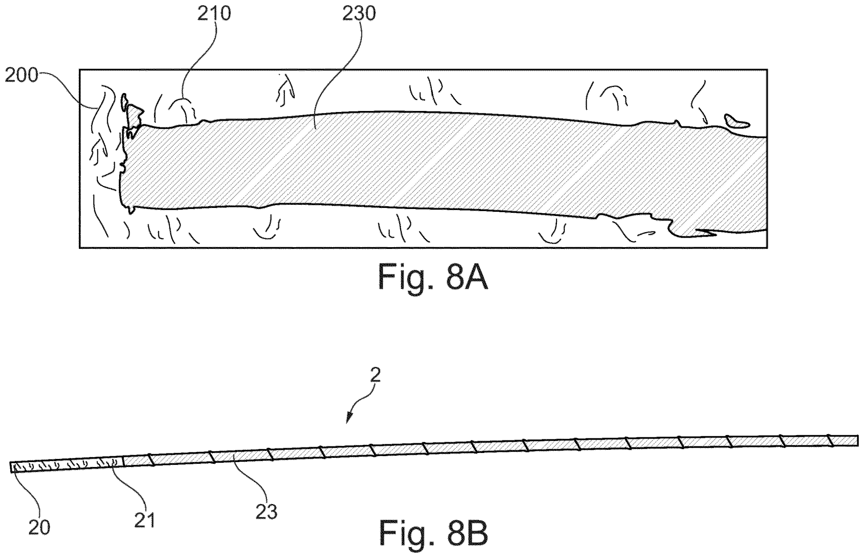

The cathode 2 may be manufactured as shown on Figures 8A and 8B: a slurry based on active cathode material 230 is coated onto a main face 210 of an aluminum foil 200.

Once the coated slurry 230 is dried, a coated strip 20 is cut, preferably by laser, and then constituted a cathode 2 with the active material 23 on one of its main faces 21.

The active material 230 of the slurry may be selected among:
- LiCoO2 (LCO);
- Lithium Nickel-Cobalt-Aluminum Oxide (NCA);
- Lithium manganese nickel oxide / spinel (LiMn1.5Ni0.5O4) (LMNO).

Preferably, the slurry 230 is composed of 80% of active material and 10% of Carbon Black and 10% of PVDF with N-methyl-2-pyrrolidone (NMP).

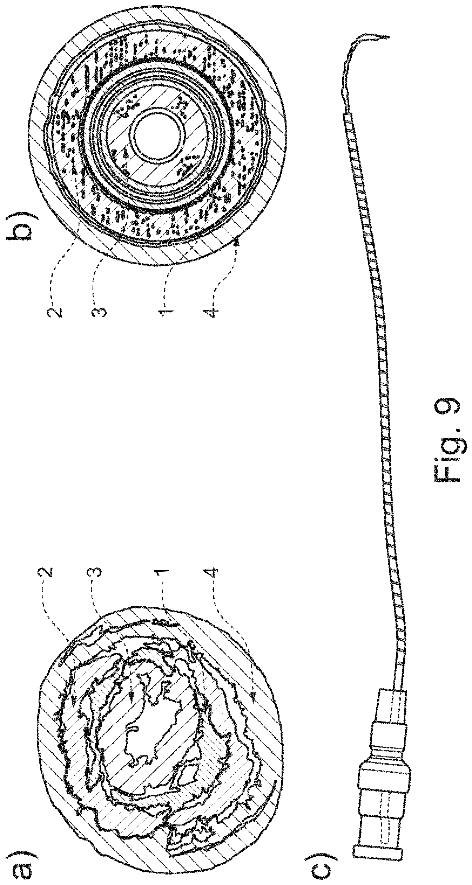

Figure 9 shows a cross-sectional view of an accumulator A according to the invention before electrolyte injection (a) and the corresponding schematic representation (b), and a reproduced photography of a fabricated accumulator according to the invention.

It stands out clearly from this figure, the very good coaxiality and the very good interfacial cohesion properties of the different components, i.e., from the core towards the outside, the anode 3, the separator 3, the cathode 2 and the encapsulation sheath 4 forming the flexible packaging.

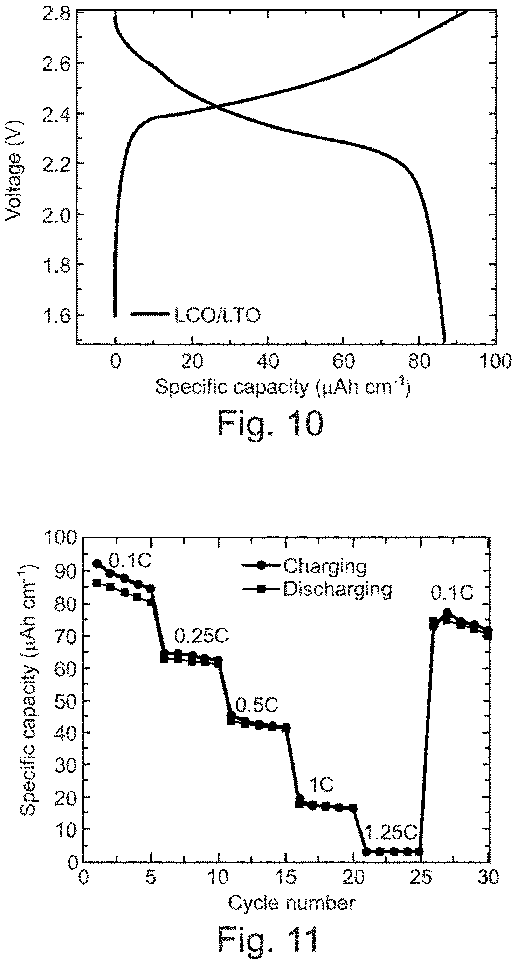

Figures 10 and 11 present GCD curves of durability test of a coaxial Li-ion accumulator according to the invention, with a LTO anode 3, and a LCO cathode 2, recorded at 0.1C rate, and rate performance at various C-rates of 0.1 0.25, 0.5 and 1, and 0,1 Crate.

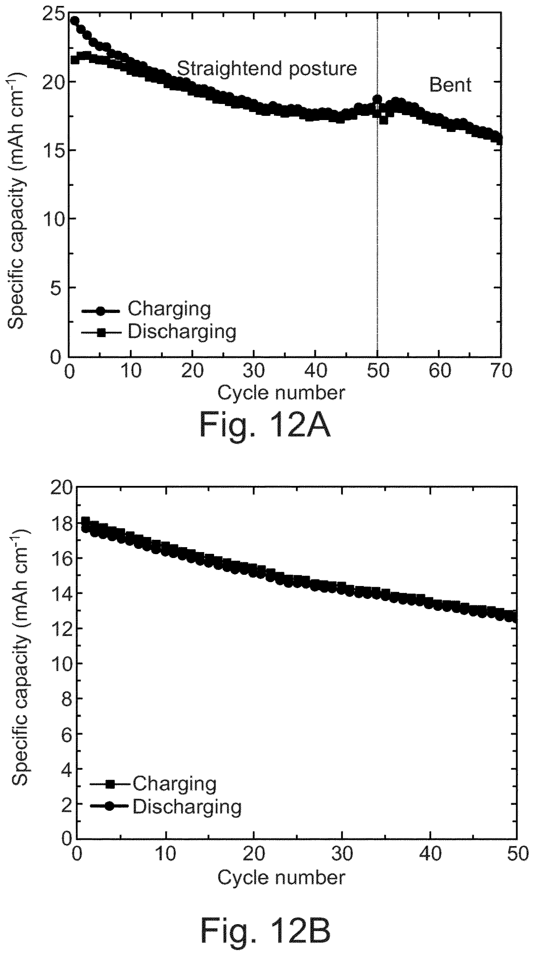

Figures 12A and 12B present GCD curves of durability test of a coaxial Li-ion accumulator according to the invention respectively at 0.5C rate for 70 cycles and at 0.5C rate for 50 cycles, with a LTO anode 3, and a LMNO cathode 2.

In figure 12A, first 50 cycles are at straight posture of the accumulator A and then remaining 20 cycles of the battery which has been bent.

The inventors have performed a stretching test of an accumulator A according to the invention by applying for at both longitudinal ends and observed the threshold displacement where the open circuit Voltage (OCV) of the accumulator breaks.

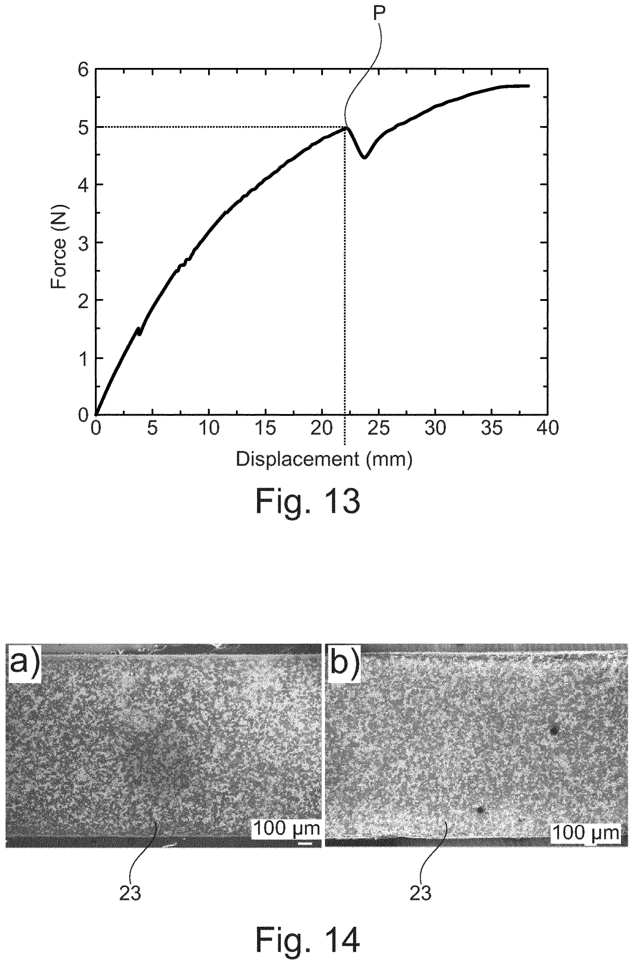

Figure 13 shows the graph which was plot between applying force in Newton and the relative displacement of battery in mm. we found the battery failed after 22% stretching from its original size. The point P is where OCV breaks.

Figure 14 shows post cycling analysis of a LCO cathode 2 after 100 cycles of charge-discharge and during this process, the accumulator was mechanically bent and flattened.

The left image shows the LCO cathode before winding and before cycling, whereas the right image shows the cathode, once wound and unwound after 100 cycling.

The results are that no leakage of electrolyte or smoking or exposure of inner components of the accumulator, was found, even after elongating more over 35% of its original size.

Finally, the technical electrical features of an accumulator A according to the invention may be summarized in Table 2 below.

**[Table 2]:**

| Current collector material (anode/cathode) | Active electrode material (cathode /anode) | Working potential (Volt) | Specific capacity | Energy density | Capacity retention/ cycles/ current density |
|---|---|---|---|---|---|
| Cu fabric/ | LCO/LTO | 1.5 - 2.8 | 85 µAh.cm⁻¹ Or 10.8mAh.cm⁻³ | 26 mWh cm⁻³ | LMNO/LT O |
| Al strip | NCA/LTO | 1-3 | | | 72 % |
| | LMNO/LTO | 2-3.4 | | | 50 cycles at 0.5C (588 µA) |

The invention is not limited to the examples which have just been described; characteristics of the examples illustrated can notably be combined with one another in variants that are not illustrated.

Other variants and enhancements can be envisaged without departing from the scope of the invention.

For example, if in the illustrated example, the anode is the innermost helix and the cathode is the outermost helix, an opposite configuration can be achieved, i.e. the anode being the outermost helix whereas the anode is the innermost helix.

### List of references cited:

[1]: Tatsuma Hoshide and al., "Flexible Lithium-Ion Fiber Battery by the Regular Stacking of Two-Dimensional Titanium Oxide Nanosheets Hybridized with Reduced Graphene Oxide", Nano Lett. 2017, 17, 6, pages 3543-3549.
[2]: Angewandte Chemie International Edition, 2014, vol. 53, no 30, p. 7958-7958.
[3]: Jae-Kwang Kim and al. "A layer-built rechargeable lithium ribbon-type battery for high energy density textile battery applications". Journal of Material Chemistry A, 2014, 2, pages 1774-1780.
[4]: Jiqing He and al., "Scalable production of high-performing woven lithium-ion fibre batteries" Nature volume 597, pages 57-63 (2021).
[5]: Amit Yadav and al., "Facile Development Strategy of a Single Carbon-Fiber-Based All-Solid-State Flexible Lithium-Ion Battery for Wearable Electronics" ACS Applied Material Interfaces 2019, 11, pages 7974-7980.
[6]: Wei weng and al., "Winding Aligned Carbon Nanotube Composite Yarns into Coaxial Fiber Full Batteries with High Performances" Nano Lett. 2014, 14, 6, pages 3432-3438.
[7]: Tural Khudiyev, and al. "Thermally drawn rechargeable battery fiber enables pervasive power", Materials Today, 2022, vol. 52, p. 80-89.

## Claims

1. A metal-ion electrochemical accumulator (A), comprising:
- a first (20) and a second (30) electrically conductive substrate forming a current collector each comprising two main faces (21, 22; 31, 32), only one of which supports an active electrode material (23; 33) in defining an electrode (2; 3), the electrode active material supported by the second collector being of opposite polarity to that supported by the first collector, the first and second collectors being wound in coaxial helices around each other ;
- at least one electrically insulating separator film (1) impregnated with an electrolyte, arranged in contact with each of the electrode materials supported by the first and second collectors;
- an encapsulation sheath forming a flexible packaging (6), covering the periphery of the helix of the first or the second collector which is the outermost, to contain the first and the second collectors and the separator film, with sealing while being crossed by a first and a second pole of the accumulator respectively connected or constituted by a part of the first or of the second collector.

2. The metal-ion electrochemical accumulator (A) according to Claim 1, the helices of the first and of the second collector being circular helices.

3. The metal-ion electrochemical accumulator (A) according to Claim 1 or Claim 2, the first and/or the second collector being a strip of metal fabric or metal braid or metal foil.

4. The metal-ion electrochemical accumulator (A) according to Claim 3, the fabric or the braid or the strip being of uniform width.

5. The metal-ion electrochemical accumulator (A) according to Claim 3 or Claim 4, the innermost fabric or braid or strip being wound helically with partial overlap, preferably between 0 and 50% and at an angle between 110 and 130 degrees to the axis of winding.

6. The metal-ion electrochemical accumulator (A) according to one of the preceding claims, the first and/or the second current collector being in aluminum or in copper.

7. The metal-ion electrochemical accumulator (A) according to one of the preceding claims, the separator film also being helically wrapped around the electrode active material of the innermost first or second collector.

8. The metal-ion electrochemical accumulator (A) according to one of the preceding claims, the separator film being a non-woven web of polymeric material.

9. The metal-ion electrochemical accumulator (A) according to claim 8, the polymer material is selected among polypropylene (PP), polyethylene (PE), polyvinylidene fluoride (PVDF), polytetrafluoroethylene (PTFE), poly (vinylidene fluoride-co-hexafluoropropylene) (PVDF-HFP).

10. The metal-ion electrochemical accumulator (A) according to claims 8 and 9, the polymer film being a polypropylene nonwoven.

11. The metal-ion electrochemical accumulator (A) according to one of the preceding claims, the first and the second current collector and, where applicable, the separator film being wound helically in the same winding direction or in the opposite direction.

12. The metal-ion electrochemical accumulator (A) according to one of the preceding claims, the encaspulation sheath being a heat-shrink sheath on the first or the second current collector.

13. The metal-ion electrochemical accumulator (A) according to Claim 12, the material of the heat-shrink sheath is selected among polyethylene (PE), polyvinylidene fluoride (PVDF), polytetrafluoroethylene (PTFE).

14. The metal-ion electrochemical accumulator (A) according to one of the preceding claims, comprising two output terminals each under the form of a pin header, one of the two pin headers being soldered with the helix cathode and extending in the longitudinal direction of one end of the accumulator and electrically insulated with the helix anode, whereas the other of the two pin headers being soldered with the helix anode and extending in the longitudinal direction of the other end of the accumulator and electrically insulated with the helix cathode.

15. The metal-ion electrochemical accumulator (A) according to one of the preceding claims, configured to be stretchable at least 2% of its length, preferably up to 10%.

16. The metal-ion electrochemical accumulator (A) according to one of the preceding claims, constituting a Li-ion accumulator, in which:
- the material of the negative electrode or electrodes is chosen from the group comprising graphite, lithium, titanate oxide Li₄TiO₅O₁₂;
- the material of the positive electrode(s) is chosen from the group of intercalation/insertion compounds of the LiMO₂ type with M representing Co, Ni or Mn; LiM'₂O₄ with M' representing Ni or Mn; LiM"PO₄ with M" representing Fe, Co, Mn or Ni.

17. A module or a pack-battery, comprising a plurality of accumulators according to one of the preceding claims electrically connected in series and/or in parallel.

18. A method for producing an accumulator according to one of the claims 1 to 16, comprising the following steps:
a/ supply of a first current collector;
b/ winding of the first current collector on itself in a helix;
c/ deposition of an active electrode material on the first coiled collector thus forming a first of the electrodes;
d/ supply and installation of an electrically insulating separator film onto the active material of the first of the electrodes;
e/ supply of a second current collector on which is already deposited an active material of opposite polarity to that deposited on the first collector, thus forming the second of the electrodes;
f/ winding of the second current collector in a helix with its active electrode material around and in contact with the separator film;
g/ insertion of an electrolyte injection needle at one of the longitudinal ends of the subassembly formed after step f/;
h/ laying an encapsulation sheath around the second collector of the sub-assembly according to step g/;
i/ injection of an electrolyte in liquid or gel form into the injection needle so as to carry out the electrochemical formation of the accumulator.

19. The method according to Claim 18, step d/ being achieved by winding in a helix by covering the active material of the first of the electrodes.

20. The method according to Claim 18 or Claim 19, step d/ being achieved by thermal roll-pressing the separator film onto the active material of the first of the electrodes.

21. The method according to one of Claim 18 to Claim 20, step c/ being achieved by dip coating the first helically wound collector.

22. The method according to one of Claim 18 to Claim 21, step h/ being achieved by heat-shrinking on the second helically wound collector.

23. Use of the accumulator according to one of claims 1 to 16 to electrically supply a connected and communicating object, a medical device, an electronic device implanted in a textile.
